# FASCICULE DE BREVET EUROPEEN

(11) **EP 1 770 332 B1**
(45) Date de publication et mention de la délivrance du brevet: **04.06.2008**
(21) Numéro de dépôt: 06076737.3
(22) Date de dépôt: 18.09.2006
(51) Int. Cl.: F23R 3/28, F23R 3/00, F23R 3/60

(54) **Dispositif de guidage d'un élément dans un orifice d'une paroi de chambre de combustion de turbomachine**
Vorrichtung zur Führung einer Einrichtung in eine Öffnung einer Gasturbinenbrennkammerwand
Device for guiding an element into an orifice of a gas turbine combustion chamber wall

(30) Priorité: 29.09.2005 FR 0509925
(43) Date de publication de la demande: 04.04.2007
(73) Titulaire: SNECMA, 75015 Paris (FR)
(72) Inventeur: Gautier, Claude, 77176 Savigny le Temple (FR); Sandelis, Denis, 77370 Nangis (FR)

(56) Documents cités:
- EP-A- 1 424 469
- FR-A- 2 856 466
- US-A- 3 990 834

## Description

La présente invention concerne un dispositif de guidage d'un élément, tel qu'une bougie d'allumage ou un injecteur de démarrage, s'étendant dans un orifice d'une paroi de chambre de combustion de turbomachine.

Une chambre annulaire de combustion de turbomachine est délimitée par des parois de révolution coaxiales qui s'étendent l'une à l'intérieur de l'autre et qui sont reliées à leurs extrémités amont par une paroi annulaire de fond de chambre comportant des orifices d'alimentation en air et des moyens d'amenée de carburant.

La paroi externe de la chambre comporte, au voisinage de son extrémité amont, au moins un orifice de passage d'une bougie d'allumage destinée à amorcer la combustion du mélange de carburant et d'air dans la chambre. Dans certains cas, des injecteurs de démarrage, indépendants des moyens d'amenée de carburant précités, sont montés également dans des orifices de la paroi externe et répartis autour de l'axe de la chambre, pour améliorer l'amorçage de la combustion du mélange d'air et de carburant dans la chambre, un de ces injecteurs se trouvant au voisinage de la ou de chaque bougie d'allumage.

En fonctionnement de la turbomachine, les parois interne et externe de la chambre de combustion se dilatent thermiquement et sont soumises à des vibrations importantes, ce qui engendre des déplacements relatifs entre la paroi externe de la chambre et les éléments (bougies et injecteurs de démarrage) qui sont montés dans des orifices de cette paroi et qui sont portés par un carter externe de la chambre de combustion.

Pour compenser ces déplacements relatifs, on utilise des dispositifs de guidage de ces éléments qui comprennent chacun une bague et une douille sensiblement coaxiales montées l'une à l'intérieur de l'autre, la bague étant destinée à être traversée axialement par l'élément et comportant un rebord annulaire externe guidé transversalement dans une gorge annulaire interne de la douille qui est destinée à être fixée sur le bord de l'orifice de la paroi externe de la chambre.

La bague et la douille délimitent autour de l'élément un passage annulaire cylindrique débouchant dans la chambre et à l'intérieur de laquelle peuvent s'engager de faibles quantités de mélange d'air et de carburant qui provoquent au bout d'un certain temps la formation de coke entre le dispositif et l'élément et peuvent donc gêner le guidage de l'élément par le dispositif. De plus, la formation de coke peut favoriser la création de points chauds pouvant fragiliser le dispositif et l'élément. Enfin, le dépôt de coke sur une bougie d'allumage peut perturber l'inflammation du mélange d'air et de carburant.

Afin de pallier à cet inconvénient, il est connu, comme illustré dans le document EP 1 424 469, de disposer des orifices de circulation d'air sur le dispositif de guidage, permettant d'amener de l'air de l'extérieur vers l'intérieur de la chambre.

L'invention a notamment pour but d'apporter une solution simple, efficace et économique afin d'empêcher la formation de coke, tout en améliorant la ventilation et le refroidissement dans le dispositif de guidage.

Elle propose à cet effet un dispositif de guidage d'un élément dans un orifice d'une paroi de chambre de combustion de turbomachine, comprenant une bague et une douille sensiblement coaxiales montées l'une à l'intérieur de l'autre, la bague étant destinée à être traversée axialement par l'élément et comportant un rebord annulaire externe guidé transversalement dans une gorge annulaire interne de la douille destinée à être fixée sur le bord de l'orifice de la paroi de la chambre de combustion, la bague et la douille délimitant autour de l'élément un passage annulaire cylindrique débouchant dans la chambre, ce dispositif de guidage comprenant des moyens de circulation d'air formés dans la bague et dans la douille et répartis autour de leur axe pour établir une circulation d'air dans le passage cylindrique de l'extérieur vers l'intérieur de la chambre de combustion. Le dispositif de guidage selon l'invention est remarquable en ce que les moyens de circulation d'air formés dans la bague comprennent des orifices traversant formés dans le rebord annulaire de la bague, ces orifices étant régulièrement répartis autour de l'axe de la bague et débouchant dans le passage annulaire cylindrique. Ce dispositif est de plus remarquable en ce que la douille comprend une paroi cylindrique délimitant extérieurement le passage cylindrique formé autour de 'l'élément à l'extérieur de la chambre de combustion, et en ce que les moyens de circulation d'air formés dans la douille comprennent des orifices traversants formés dans cette paroi cylindrique de la douille et régulièrement répartis autour de l'axe de la douille.

Les moyens de circulation d'air permettent de ventiler le passage cylindrique par amenée d'air depuis l'extérieur de la chambre vers l'intérieur de la chambre de combustion, empêchant ainsi le mélange d'air et de carburant de s'engager dans le passage cylindrique et d'y séjourner, et donc réduisant ou évitant le risque de formation de coke qui peut gêner le guidage de l'élément.

L'élément guidé dans l'orifice de la paroi de la chambre peut être une bougie d'allumage ou un injecteur de démarrage. Dans le cas où l'élément est une bougie d'allumage, l'invention permet également d'éviter que l'inflammation du mélange d'air et de carburant ne soit perturbée par la présence de coke.

La perte de charge de l'air entre l'extérieur et l'intérieur de la chambre est sensiblement constante en fonctionnement et est par exemple de l'ordre de 4 à 5%, quel que soit le régime moteur, ce qui permet d'assurer une arrivée d'air dans le passage cylindrique qui représente environ 0,3% du débit d'air dans la chambre.

Les orifices de la douille et de la bague permettent de ventiler le passage cylindrique et d'éviter la formation de coke entre l'élément et la douille et entre l'élément et la bague. Les orifices permettent également de refroidir la douille et la bague par passage d'air dans ces orifices. Ils peuvent s'étendre radialement ou être inclinés par rapport à l'axe de la bague et de la douille de manière à augmenter la surface de contact entre l'air et la douille ou la bague et donc améliorer le refroidissement du dispositif.

Les moyens de circulation d'air peuvent également comprendre des cannelures axiales formées dans une surface cylindrique interne de la bague servant au guidage de l'élément, ces cannelures étant régulièrement réparties autour de l'axe de la bague et débouchant à une de leurs extrémités dans le passage annulaire et à l'autre de leurs extrémités à l'extérieur de la chambre.

Les cannelures permettent le passage d'air depuis l'extérieur de la chambre dans le passage cylindrique, empêchent la formation de coke entre la surface de guidage de la bague et l'élément et améliorent le coulissement axial de l'élément dans la bague.

Les moyens de circulation d'air peuvent en outre comprendre des rainures radiales formées dans une surface annulaire transversale de la gorge de la douille et/ou dans une surface annulaire transversale du rebord de la bague, ces rainures étant régulièrement réparties autour de l'axe de la douille et de la bague et débouchant à une de leurs extrémités dans le passage annulaire cylindrique et à l'autre de leurs extrémités à l'extérieur de la chambre.

Ces rainures radiales permettent également l'amenée d'air depuis l'extérieur de la chambre dans le passage cylindrique et dans la chambre. Elles empêchent la formation de coke entre le rebord de la bague et la gorge de la douille et améliorent le glissement transversal du rebord de la bague sur la surface annulaire de la douille.

La douille peut être fixée sur le bord de l'orifice de la paroi de la chambre de combustion par brasage ou soudage.

La présente invention concerne également une chambre de combustion de turbomachine, caractérisée en ce qu'elle comprend au moins un dispositif tel que décrit ci-dessus, et une turbomachine, telle en particulier qu'un turboréacteur ou un turbopropulseur d'avion, caractérisée en ce qu'elle comprend au moins un dispositif tel que décrit ci-dessus.

L'invention sera mieux comprise et d'autres caractéristiques, détails et avantages de celle-ci apparaîtront plus clairement à la lecture de la description qui suit, faite à titre d'exemple non limitatif en référence aux dessins annexés dans lesquels :
- la figure 1 est une demi-vue schématique en coupe axiale d'une chambre de combustion d'une turbomachine équipée d'un dispositif de guidage d'un élément selon la technique antérieure;
- la figure 2 est une vue schématique à plus grande échelle du dispositif de guidage de la figure 2 ;
- la figure 3 est une vue schématique en coupe axiale d'un mode de réalisation de la douille du dispositif de guidage selon l'invention ;
- la figure 4 est une vue schématique en coupe axiale d'une variante de réalisation de la douille du dispositif de guidage selon l'invention ;
- la figure 5 est une vue schématique en coupe axiale d'un mode de réalisation de la bague du dispositif de guidage selon l'invention ;
- la figure 6 est une vue schématique en coupe axiale d'une variante de réalisation de la bague du dispositif de guidage selon l'invention

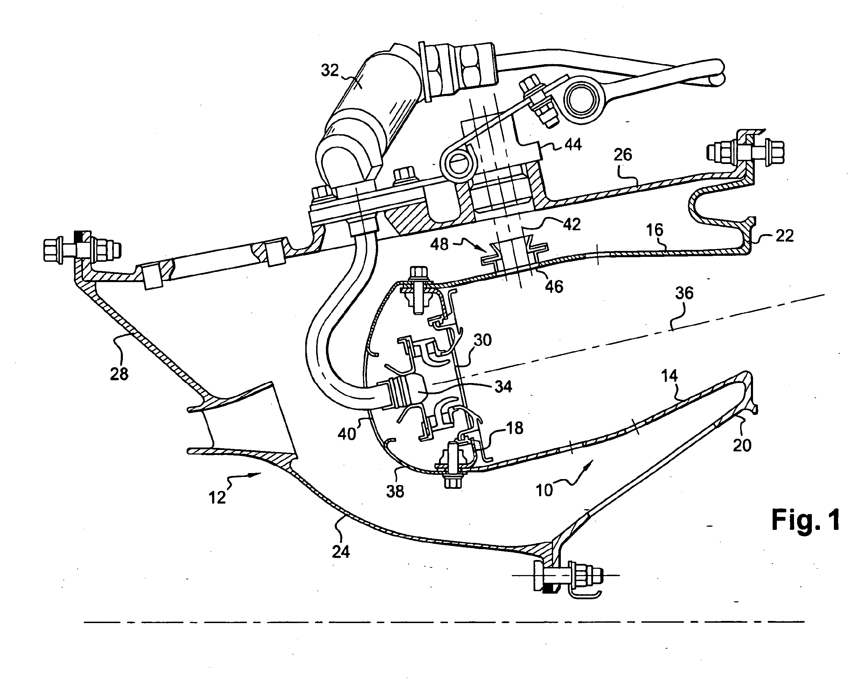

En figure 1, une chambre annulaire de combustion 10 est agencée en sortie d'un diffuseur 12, lui même situé en sortie d'un compresseur, non représenté, et comprend une paroi de révolution interne 14 et une paroi de révolution externe 16 reliées en amont à une paroi annulaire 18 de fond de chambre et fixées en aval par des brides annulaires interne 20 et externe 22 respectivement sur un voile tronconique interne 24 du diffuseur, et sur une extrémité aval d'un carter externe 26 de la chambre, l'extrémité amont de ce carter 26 étant fixée sur un voile tronconique externe 28 du diffuseur.

La paroi 18 de fond de chambre comporte des orifices 30 à travers lesquels passent de l'air provenant du diffuseur 12 et du carburant amené par des injecteurs 32 fixés sur le carter externe 26 et régulièrement répartis sur une circonférence autour de l'axe longitudinal A de la chambre. Chaque injecteur 32 comprend une tête 34 d'injection de carburant montée sur la paroi 18 de fond de chambre et alignée avec l'axe 36 d'un des orifices 30 de cette paroi. Un capot annulaire 38 incurvé vers l'amont est fixé sur les extrémités amont des parois 14, 16 et 18 de la chambre et comprend des orifices 40 de passage d'air alignés avec les orifices 30 de la paroi 18 de fond de chambre.

Le carburant injecté dans la chambre 10 se mélange à l'air provenant du diffuseur et est enflammé au moyen d'une ou de deux bougies d'allumage, telles que celle schématiquement représentée en traits discontinus 42, qui s'étendent radialement à l'extérieur de la chambre et sont diamétralement opposées par rapport à l'axe A. Ces bougies 42 sont guidés à leur extrémité interne dans un orifice 46 de la paroi externe 16 de la chambre et leur autre extrémité externe est fixée par des moyens 44 appropriés sur le carter externe 26 et reliée à des moyens d'alimentation électrique, non représentés, situés à l'extérieur du carter 26.

Des dispositifs 48 de guidage des extrémités internes des bougies d'allumage sont fixés à l'extérieur de la chambre 10 sur la paroi externe 16, autour des orifices 46 pour compenser les déplacements relatifs entre la paroi externe 16 de la chambre et les bougies 42 portées par le carter 26 pendant le fonctionnement de la turbomachine.

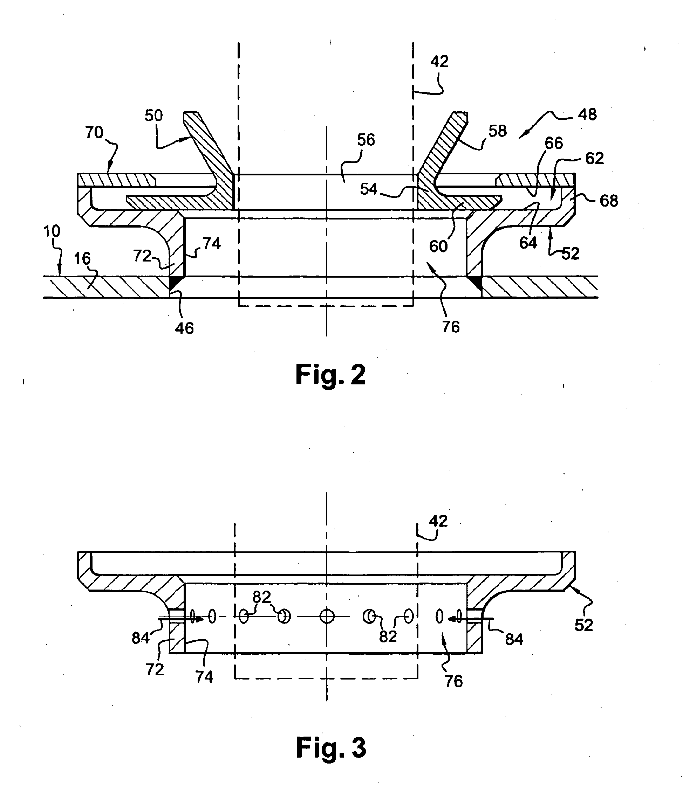

Ce dispositif 48 de guidage, mieux visible en figure 2, comporte une bague 50 traversée axialement par la bougie 42 et montée à l'intérieur d'une extrémité d'une douille 52 coaxiale, dont l'autre extrémité est fixée par brasage, soudage ou analogue sur la paroi externe 16 de la chambre, autour de l'orifice 46 de passage de la bougie.

La bague 50 comprend une partie cylindrique 54 dont la surface interne 56 entoure avec un faible jeu la bougie 42 et sert au guidage de celle-ci dans une direction axiale. Cette partie cylindrique 54 est reliée à son extrémité située du côté opposé à la chambre, à une partie tronconique 58 évasée vers l'extérieur qui sert au guidage de la bougie lors de son montage dans le dispositif, et comporte à son autre extrémité un rebord annulaire 60 qui s'étend radialement vers l'extérieur par rapport à l'axe de la bague 50 et qui est guidé dans une gorge annulaire interne 62 de la douille 52, située du côté opposé à la chambre 10.

La gorge annulaire 62 de la douille est délimitée axialement par deux surfaces annulaires 64, 66 qui s'étendent radialement par rapport à l'axe de la douille 52 et qui sont reliées l'une à l'autre à leurs périphéries externes par une paroi cylindrique 68 de la douille. Les surfaces annulaires 64, 66 permettent de guider le rebord externe 60 de la bague dans un plan radial ou transversal par rapport à l'axe de la douille. Dans l'exemple représenté, la paroi cylindrique 68 et la surface annulaire 64 située du côté de la chambre sont formées par une collerette de la douille 52 et la surface annulaire 66 située du côté opposé à la chambre est formée par une rondelle 70 ou une plaque rapportée et soudée sur l'extrémité de la paroi cylindrique 68.

Le diamètre externe du rebord annulaire 60 de la bague 50 est inférieur au diamètre interne de la paroi cylindrique 68 de la douille 52 et le diamètre externe de la partie cylindrique 54 de la bague est inférieur au diamètre interne de la rondelle 70 pour autoriser des déplacements du rebord 60 de la bague dans la gorge 62 dans un plan transversal. La dimension axiale ou épaisseur du rebord externe 60 de la bague est en outre inférieur à la dimension axiale de la gorge 62 de la douille pour autoriser des décalages angulaires entre les axes de la bague 50 et de la douille 52.

L'extrémité de la douille 52 fixée sur la paroi externe 16 est formée par une paroi cylindrique 72 dont la surface interne 74 délimite extérieurement autour de la bougie 42 un passage annulaire cylindrique 76 qui débouche dans la chambre 10 à travers l'orifice 46 de passage de la bougie. Dans l'exemple représenté, le diamètre de la surface interne 74 de la douille est supérieur au diamètre de la surface cylindrique 56 de la bague et légèrement inférieur au diamètre de l'orifice 46 de passage de la bougie.

En fonctionnement, de faibles quantités de mélange d'air et de carburant peuvent s'engager depuis l'extérieur de la chambre dans le passage cylindrique 76 et provoquer au bout d'un certain temps la formation et l'accumulation de coke entre la bague 50, la douille 52 et la bougie 42. Comme aucun moyen n'est prévu pour éliminer ce coke, cela peut à la longue empêcher le déplacement de la bague 50 dans la douille et perturber l'inflammation du mélange d'air et de carburant.

La présente invention permet d'éviter ces inconvénients grâce à des moyens de circulation d'air qui permettent une amenée d'air depuis l'extérieur de la chambre dans le passage cylindrique annulaire délimité par le dispositif de guidage autour de la bougie, empêchant ainsi le mélange d'air et de carburant de s'engager dans ce passage cylindrique et d'y former du coke.

Dans un premier mode de réalisation représenté en figure 3, les moyens de circulation d'air comprennent des orifices traversants 82 formés dans la paroi cylindrique 72 de la douille et régulièrement répartis autour de l'axe de la douille. L'air à l'extérieur de la chambre pénètre dans le passage cylindrique 76 en passant à travers les orifices 82, comme indiqué par les flèches 84, et forme des jets qui viennent impacter la bougie, ce qui permet d'éviter la formation de coke dans le passage cylindrique 76 et en même temps de refroidir la paroi 72 de la douille et la bougie.

Dans l'exemple représenté, les orifices 82 sont identiques et s'étendent sensiblement radialement par rapport à l'axe de la douille.

En variante, les orifices 82 de la paroi cylindrique de la douille peuvent être de dimensions différentes et inclinés par rapport à l'axe de la douille de manière à augmenter le temps de séjour de l'air dans les orifices, améliorant ainsi le refroidissement de la douille.

Dans un exemple de réalisation où le diamètre de la bougie est compris entre 8 et 12mm et le diamètre de la surface 74 de la douille est de l'ordre de 15mm, les orifices 82 ont un diamètre compris entre 0,5 et 1,5mm et sont au nombre de 15 à 25 régulièrement répartis autour de l'axe de la douille 52.

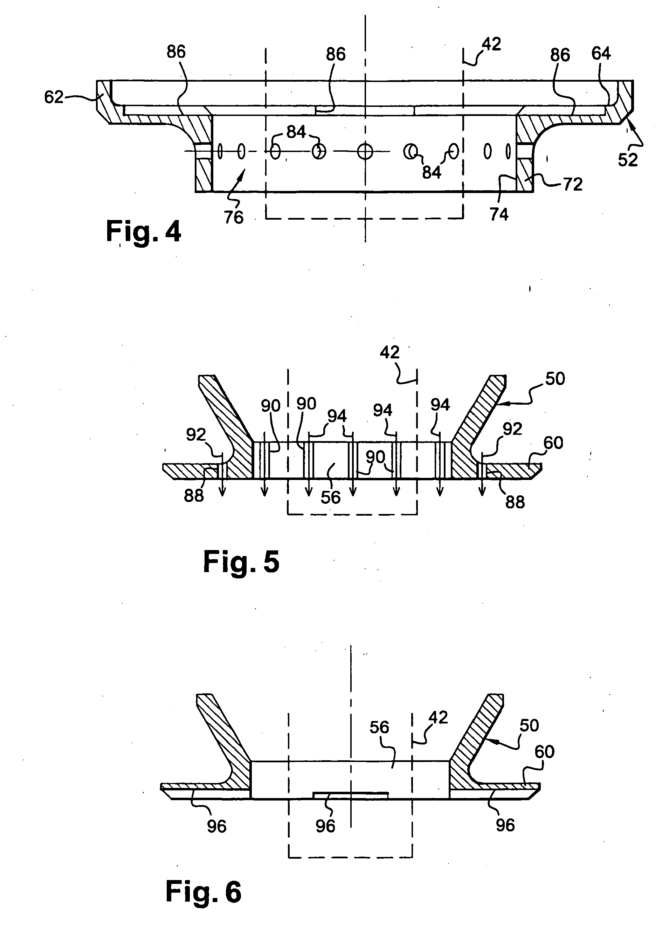

Dans la variante de réalisation de la figure 4, la douille 52 comprend en plus des orifices radiaux 82 formés dans la paroi cylindrique 72, des rainures radiales 86 qui sont formées dans la surface annulaire 64 de la gorge de guidage du rebord 60 de la bague. Leurs extrémités internes débouchent dans le passage cylindrique 76 et leurs extrémités externes sont situées sur une circonférence centrée sur l'axe de la douille et dont le diamètre est supérieur au diamètre externe du rebord annulaire 60 de la bague pour que ces extrémités externes débouchent dans la gorge 62 et communiquent avec l'extérieur de la chambre par exemple par l'intermédiaire d'ouvertures de passage d'air formées dans la rondelle 70 ou entre la rondelle 70 et la paroi cylindrique 62 de la douille. Dans l'exemple représenté, les rainures radiales 86 sont au nombre de 4 et sont régulièrement réparties autour de l'axe de la douille.

L'air qui passe dans les rainures 86, entre les surfaces annulaires radiales de la bague et de la douille, permet de ventiler le passage cylindrique 76 et d'améliorer le guidage transversal du rebord 60 de la bague dans la gorge de la douille.

Dans le mode de réalisation représenté en figure 5, les moyens de circulation d'air comprennent des orifices traversants 88 formés dans le rebord annulaire 60 de la bague et des cannelures 90 formées dans la surface cylindrique interne 56 de la bague, les orifices 88 et les cannelures 90 étant régulièrement répartis autour de l'axe de la bague et débouchant dans le passage cylindrique 76.

Les orifices 88 sont situés sur une circonférence centrée sur l'axe de la bague et dont le diamètre est inférieur au diamètre interne de la rondelle 70 et au diamètre de la surface cylindrique 74 de la douille de sorte que de l'air puisse circuler dans le passage cylindrique depuis l'extérieur de la chambre en passant entre la rondelle 70 de la douille et la partie cylindrique 54 de la bague et à travers les orifices 88, comme indiqué par les flèches 92. Ces orifices 88 peuvent être parallèles à l'axe de la bague, comme représenté, ou inclinés par rapport à cet axe de manière à augmenter le temps de séjour de l'air dans la bague et le refroidissement de la bague, comme précédemment décrit en référence à la figure 3.

Les cannelures 90 s'étendent sur toute la dimension axiale de la surface cylindrique 56 et permettent la circulation d'air entre l'extérieur de la chambre et le passage cylindrique 76, comme indiqué par les flèches 94. Dans l'exemple représenté, les cannelures sont rectilignes, parallèles à l'axe de la bague, et au nombre de 10.

Dans la variante de réalisation de la figure 6, les moyens de circulation d'air de la bague 50 comprennent des rainures radiales 96 qui sont formées dans la surface annulaire radialement interne du rebord 60 de la bague, en regard de la surface de guidage 64 de la douille, et qui s'étendent sur toute la dimension radiale du rebord 60, débouchant ainsi à leurs extrémités internes dans le passage cylindrique 76 et à leurs extrémités externes dans la gorge annulaire 62 qui communique avec l'extérieur de la chambre, comme précédemment décrit en référence à la figure 4. Dans l'exemple représenté, les rainures radiales 96 sont au nombre de 4 et sont régulièrement réparties autour de l'axe de la douille. Comme dans le mode de réalisation de la figure 4, ces rainures 96 permettent de ventiler le passage cylindrique 76 et d'améliorer le guidage transversal du rebord de la bague dans la gorge de la douille.

L'élément 42 représenté dans les dessins peut également être un injecteur de démarrage, différent et indépendant des injecteurs 32 décrits ci-dessus, destiné à être monté dans un orifice radial de la paroi externe 16 de la chambre, notamment au voisinage d'une bougie d'allumage, pour pulvériser du carburant sur l'arc électrique généré par la bougie afin d'améliorer et accélérer la propagation de la combustion à l'intérieur de la chambre.

Bien entendu, l'invention n'est pas limitée aux modes de réalisation qui ont été décrits dans ce qui précède et représentés dans les dessins annexés. Le dispositif de guidage selon l'invention peut par exemple comprendre un seul ou une combinaison des moyens de circulation d'air qui ont été décrits, parmi les orifices traversants 82 de la paroi cylindrique 72 de la douille (figure 3), les rainures radiales 86 dans la surface annulaire de la douille de guidage du rebord externe de la bague (figure 4), les cannelures 90 dans la surface cylindrique de la bague de guidage de l'élément (figure 5), les orifices traversants 88 dans le rebord externe de la bague (figure 5) et les rainures radiales 96 dans la surface annulaire du rebord externe de la bague guidée dans la gorge 62 de la douille.

## Revendications

1. Dispositif de guidage d'un élément dans un orifice d'une paroi de chambre de combustion (10) de turbomachine, comprenant une bague (50) et une douille (52) sensiblement coaxiales montées l'une à l'intérieur de l'autre, la bague (50) étant destinée à être traversée axialement par l'élément et comportant un rebord annulaire externe (60) guidé transversalement dans une gorge annulaire interne (62) de la douille (52) destinée à être fixée sur le bord de l'orifice (46) de la paroi de la chambre de combustion (10), la bague (50) et la douille (52) délimitant autour de l'élément un passage annulaire cylindrique (76) débouchant dans la chambre (10), ce dispositif de guidage comprenant des moyens de circulation d'air formés dans la bague (50) et dans la douille (52) et répartis autour de leur axe pour établir une circulation d'air dans le passage cylindrique (76) de l'extérieur vers l'intérieur de la chambre de combustion (10), **caractérisé en ce que** les moyens de circulation d'air formés dans la bague (50) comprennent des orifices traversants (88) formés dans le rebord annulaire (60) de la bague (50), ces orifices (88) étant régulièrement répartis autour de l'axe de la bague (50) et débouchant dans le passage annulaire cylindrique (76), **en ce que** la douille (52) comprend une paroi cylindrique (72) délimitant extérieurement le passage cylindrique (76) formé autour de l'élément à l'extérieur de la chambre de combustion (10), et **en ce que** les moyens de circulation d'air formés dans la douille (52) comprennent des orifices traversants (82) formés dans cette paroi cylindrique (72) de la douille (52) et régulièrement répartis autour de l'axe de la douille.

2. Dispositif selon la revendication 1, **caractérisé en ce que** les orifices (82) de la paroi cylindrique (72) de la douille (72) s'étendent radialement par rapport à l'axe de la douille.

3. Dispositif selon la revendication 1, **caractérisé en ce que** les orifices (82) de la paroi cylindrique (72) de la douille (52) sont inclinés par rapport à l'axe de la douille.

4. Dispositif selon l'une des revendications 1 à 3, **caractérisé en ce que** les moyens de circulation d'air comprennent des cannelures axiales (90) formées dans une surface cylindrique interne (56) de la bague (50) servant au guidage de l'élément, ces cannelures (90) étant régulièrement réparties autour de l'axe de la bague (50).

5. Dispositif selon l'une des revendications 1 à 4, **caractérisé en ce que** les moyens de circulation d'air comprennent des rainures radiales (86, 96) formées dans une surface annulaire transversale (64) de la gorge (62) de la douille (52) et/ou dans une surface annulaire transversale du rebord (60) de la bague (50), ces rainures (86, 96) étant régulièrement réparties autour de l'axe de la douille (52) et de la bague (50).

6. Dispositif selon la revendication 5, **caractérisé en ce que** les rainures (86, 96) débouchent à une de leurs extrémités dans le passage annulaire cylindrique (76) et à l'autre de leurs extrémités à l'extérieur de la chambre.

7. Dispositif selon l'une des revendications précédentes, **caractérisé en ce que** la douille (52) est fixée sur la paroi de la chambre (10) par brasage ou soudage.

8. Dispositif selon l'une des revendications précédentes, **caractérisé en ce que** l'élément guidé dans l'orifice (46) de la paroi de la chambre est une bougie d'allumage (42).

9. Dispositif selon l'une des revendications 1 à 7, **caractérisé en ce que** l'élément guidé dans l'orifice (46) de la paroi de la chambre est un injecteur de démarrage.

10. Chambre de combustion (10) de turbomachine, **caractérisée en ce qu'**elle comprend au moins un dispositif (48) selon l'une des revendications précédentes.

11. Turbomachine, telle en particulier qu'un turboréacteur ou un turbopropulseur d'avion, **caractérisée en ce qu'**elle comprend au moins un dispositif (48) selon l'une des revendications 1 à 10.

## Claims

1. Device for guiding an element in an orifice in a wall of a turbomachine combustion chamber (10), comprising a ring (50) and a bush (52) which are substantially coaxial and mounted one inside the other, the ring (50) being intended to be traversed axially by the element and comprising an external annular rim (60) guided transversely in an internal annular channel (62) of the bush (52) intended to be fastened to the edge of the orifice (46) in the wall of the combustion chamber (10), the ring (50) and the bush (52) delimiting around the element a cylindrical annular passage (76) opening into the chamber (10), this guiding device comprising air circulation means formed in the ring (50) and in the bush (52) and distributed about their axis so as to establish an air circulation in the cylindrical passage (76) from the outside of the combustion chamber (10) towards the inside, **characterized in that** the air circulation means formed in the ring (50) comprise through orifices (88) formed in the annular rim (60) of the ring (50), these orifices (88) being regularly distributed about the axis of the ring (50) and opening into the cylindrical annular passage (76), **in that** the bush (52) comprises a cylindrical wall (72) externally delimiting the cylindrical passage (76) formed around the element outside the combustion chamber (10), and **in that** the air circulation means formed in the bush (52) comprise through orifices (82) formed in this cylindrical wall (72) of the bush (52) and regularly distributed about the axis of the bush.

2. Device according to Claim 1, **characterized in that** the orifices (82) of the cylindrical wall (72) of the bush (52) extend radially with respect to the axis of the bush.

3. Device according to Claim 1, **characterized in that** the orifices (82) of the cylindrical wall (72) of the bush (52) are inclined with respect to the axis of the bush.

4. Device according to one of Claims 1 to 3, **characterized in that** the air circulation means comprise axial splines (90) formed in an internal cylindrical surface (56) of the ring (50) serving for guiding the element, these splines (90) being regularly distributed about the axis of the ring (50).

5. Device according to one of Claims 1 to 4, **characterized in that** the air circulation means comprise radial grooves (86, 96) formed in a transverse annular surface (64) of the channel (62) of the bush (52) and/or in a transverse annular surface of the rim (60) of the ring (50), these grooves (86, 96) being regularly distributed about the axis of the bush (52) and of the ring (50).

6. Device according to Claim 5, **characterized in that** the grooves (86, 96) open at one of their ends into the cylindrical annular passage (76) and at the other of their ends outside the chamber.

7. Device according to one of the preceding claims, **characterized in that** the bush (52) is fastened to the wall of the chamber (10) by brazing or welding.

8. Device according to one of the preceding claims, **characterized in that** the element guided in the orifice (46) in the wall of the chamber is a spark igniter (42).

9. Device according to one of Claims 1 to 7, **characterized in that** the element guided in the orifice (46) in the wall of the chamber is a starting injector.

10. Turbomachine combustion chamber (10), **characterized in that** it comprises at least one device (48) according to one of the preceding claims.

11. Turbomachine, such as, in particular, an aircraft turbojet or turboprop, **characterized in that** it comprises at least one device (48) according to one of Claims 1 to 9.

## Patentansprüche

1. Vorrichtung zur Führung eines Elements in einer Öffnung einer Wand einer Turbomaschinenverbrennungskammer (10), aufweisend einen Ring (50) und eine Hülse (52), die im wesentlichen koaxial und eine im Inneren der anderen angebracht sind, wobei der Ring (50) dazu bestimmt ist, axial von dem Element durchquert zu werden, und einen äußeren ringförmigen Rand (60) aufweist, der quer in einer inneren ringförmigen Kehle (62) der Hülse (52) geführt wird, die dazu bestimmt ist, an dem Rand der Öffnung (46) der Wand der Verbrennungskammer (10) befestigt zu werden, wobei der Ring (50) und die Hülse (52) um das Element einen zylindrischen ringförmigen Durchgang (76) abgrenzen, der in die Kammer (10) mündet, wobei diese Führungsvorrichtung Luftzirkulationsmittel aufweist, die in dem Ring (50) und in der Hülse (52) gebildet und um ihre Achse verteilt sind, um eine Luftzirkulation in dem zylindrischen Durchgang (76) von außerhalb nach innerhalb der Verbrennungskammer (10) aufzubauen, **dadurch gekennzeichnet, daß** die in dem Ring (50) ausgebildeten Luftzirkulationsmittel Durchstecköffnungen (88) aufweisen, die in dem ringförmigen Rand (60) des Rings (50) ausgebildet sind, wobei diese Öffnungen (88) regelmäßig um die Achse des Rings (50) verteilt sind und in den zylindrischen ringförmigen Durchgang (76) münden, und daß die Hülse (52) eine zylindrische Wand (72) aufweist, die außen den um das Element außerhalb der Verbrennungskammer (10) gebildeten zylindrischen Durchgang (76) abgrenzt, und daß die in der Hülse (52) gebildeten Luftzirkulationsmittel Durchstecköffnungen (82) aufweisen, die in dieser zylindrischen Wand (72) der Hülse (52) gebildet und regelmäßig um die Achse der Hülse verteilt sind.

2. Vorrichtung nach Anspruch 1, **dadurch gekennzeichnet, daß** sich die Öffnungen (82) der zylindrischen Wand (72) der Hülse (52) radial bezüglich der Achse der Hülse erstrecken.

3. Vorrichtung nach Anspruch 1, **dadurch gekennzeichnet, daß** die Öffnungen (82) der zylindrischen Wand (72) der Hülse (52) bezüglich der Achse der Hülse geneigt sind.

4. Vorrichtung nach einem der Ansprüche 1 bis 3, **dadurch gekennzeichnet, daß** die Luftzirkulationsmittel axiale Rillen (90) aufweisen, die in einer inneren zylindrischen Fläche (56) des Rings (50) gebildet sind, die zur Führung des Elements dient, wobei diese Rillen (90) regelmäßig um die Achse des Rings (50) verteilt sind.

5. Vorrichtung nach einem der Ansprüche 1 bis 4, **dadurch gekennzeichnet, daß** die Luftzirkulationsmittel radiale Nuten (86, 96) aufweisen, die in einer ringförmigen Querfläche (64) der Kehle (62) der Hülse (52) und/oder in einer ringförmigen Querfläche des Randes (60) des Rings (50) ausgebildet sind, wobei diese Nuten (86, 96) regelmäßig um die Achse der Hülse (52) und des Rings (50) verteilt sind.

6. Vorrichtung nach Anspruch 5, **dadurch gekennzeichnet, daß** die Nuten (86, 96) an einem ihrer Enden in den zylindrischen ringförmigen Durchgang (76) und am anderen ihrer Enden außerhalb der Kammer münden.

7. Vorrichtung nach einem der vorhergehenden Ansprüche, **dadurch gekennzeichnet, daß** die Hülse (52) an der Wand der Kammer (10) durch Lötung oder Schweißung befestigt ist.

8. Vorrichtung nach einem der vorhergehenden Ansprüche, **dadurch gekennzeichnet, daß** das in der Öffnung (46) der Wand der Kammer geführte Element eine Zündkerze ist.

9. Vorrichtung nach einem der Ansprüche 1 bis 7, **dadurch gekennzeichnet, daß** das in der Öffnung (46) der Wand der Kammer geführte Element ein Anlaßinjektor ist.

10. Brennkammer (10) für eine Turbomaschine, **dadurch gekennzeichnet, daß** sie wenigstens eine Vorrichtung (48) nach einem der vorhergehenden Ansprüche aufweist.

11. Turbomaschine wie insbesondere ein Strahltriebwerk oder Turboproptriebwerk für ein Flugzeug, **dadurch gekennzeichnet, daß** sie wenigstens eine Vorrichtung (48) nach einem der Ansprüche 1 bis 10 aufweist.
